# EUROPÄISCHE PATENTSCHRIFT

(11) **EP 3 621 777 B1**
(45) Veröffentlichungstag und Bekanntmachung des Hinweises auf die Patenterteilung: **13.07.2022**
(21) Anmeldenummer: 17743323.2
(22) Anmeldetag: 24.07.2017
(51) Int. Cl.: B27G 19/02, B27G 19/04, B25F 5/00

(54) **ELEKTROWERKZEUG UND VERFAHREN ZUM ERKENNEN EINES KICKBACK-EREIGNISSES EINES ELEKTROWERKZEUGS**
ELECTRIC TOOL AND METHOD FOR IDENTIFYING A KICKBACK EVENT OF AN ELECTRIC TOOL
OUTIL ÉLECTRIQUE ET PROCÉDÉ POUR REPÉRER UN ÉVÉNEMENT DE REBOND D'UN OUTIL ÉLECTRIQUE

(43) Veröffentlichungstag der Anmeldung: 18.03.2020
(73) Patentinhaber: Festool GmbH, 73240 Wendlingen (DE)
(72) Erfinder: SCHMID, Markus, 73240 Wendlingen am Neckar (DE); RUSCH, Marc, 73728 Esslingen am Neckar (DE)
(74) Vertreter: Patentanwälte Magenbauer & Kollegen Partnerschaft mbB
(86) Internationale Anmeldenummer: PCT/EP2017/068648
(87) Internationale Veröffentlichungsnummer: WO 2019/020164

(56) Entgegenhaltungen:
- EP-A1- 1 815 931
- EP-A1- 2 218 533
- WO-A1-2009/032314
- WO-A1-2010/059786
- WO-A1-2014/105935
- WO-A2-01/26064
- DE-A1-102014 206 278
- DE-A1-102014 223 374
- US-A- 3 923 126
- US-A1- 2014 166 323
- US-A1- 2016 263 674
- US-B1- 7 055 417

## Beschreibung

Die Erfindung betrifft ein Elektrowerkzeug gemäß dem Oberbegriff der Patentansprüche 1 und 2, mit einem als Sägeblatt oder Fräser ausgebildeten rotierbaren Werkzeug, einer Sensoreinrichtung zur Erfassung einer mechanischen Größe, wobei die mechanische Größe eine Kraft, eine Beschleunigung, eine Geschwindigkeit, eine Auslenkung, eine Deformation und/oder eine mechanische Spannung umfasst und die mechanische Größe von einer vom Sägeblatt ausgehenden Kraft abhängt, sowie einer mit der Sensoreinrichtung kommunikativ gekoppelten Steuereinrichtung, die ausgebildet ist, basierend auf der erfassten mechanischen Größe ein Kickback-Ereignis des Elektrowerkzeugs zu erkennen.

Mit dem Begriff "Kickback-Ereignis" ist insbesondere ein Ereignis gemeint, bei dem während der Bearbeitung eines Werkstücks durch das Elektrowerkzeug eine plötzliche und unerwartete Kraft zwischen dem Elektrowerkzeug und dem Werkstück auftritt, durch die das Elektrowerkzeug oder das Werkstück dann beschleunigt und in Bewegung versetzt wird. Bei Tischkreissägen führt ein Kickback in der Regel zu einer unerwarteten Beschleunigung des Werkstücks in Richtung des Benutzers. Bei Handkreissägen kann es bei einem Kickback zu unerwarteten Bewegungen des Werkzeugs kommen. Kickbacks können zu Verletzungen des Benutzers führen und stellen daher eine Beeinträchtigung der Betriebssicherheit dar. Ein Kickback-Ereignis kann insbesondere bei einem ruckartigen, zu schnellen Eintauchen des Werkzeugs in das Werkstück, bei einem Rückwärtssägen, einem Verklemmen des Werkzeugs im Werkstück, bei bestimmten Werkstückeigenschaften (z.B. inhomogenes Holz, Spannungen) und/oder bei einem stumpfen Werkzeug auftreten.

Die WO 2014/105935 A1 beschreibt eine Tischsäge mit einem Kickback-Detektionssystem, das einen Sensor umfasst, der ausgebildet ist, eine Auslenkung einer Welle als skalare Größe zu erfassen. Eine Steuerung vergleicht die erfasste Auslenkung mit einem skalaren Schwellenwert, um festzustellen, ob ein Kickback vorliegt.

Die DE 10 2014 223374 A1 betrifft ein Verfahren zum automatischen Verwalten eines elektrischen Geräts, ein elektrisches Gerät, eine Rechenvorrichtung zum automatischen Verwalten eines elektrischen Geräts sowie ein System. Das Verfahren umfasst die Schritte: Übermitteln einer Gerät-Identifikation des elektrischen Geräts und einer Benutzer-Identifikation eines Benutzers an eine Rechenvorrichtung; Erzeugen eines Verwaltungssignals basierend auf der übermittelten Gerät-Identifikation und der übermittelten Benutzer-Identifikation mittels der Rechenvorrichtung entsprechend einem Verwaltungsprogramm der Rechenvorrichtung; Übermitteln des Verwaltungssignals zum Verwalten der Funktion des elektrischen Geräts an das elektrische Gerät; Übermitteln der Benutzer-Identifikation an das elektrische Gerät; Freischalten oder Blockieren der Funktion des elektrischen Geräts durch das elektrische Gerät basierend auf dem übermittelten Verwaltungssignal und der übermittelten Benutzer-Identifikation.

Die EP 1 815 931 A1 betrifft ein Verfahren zur Einstellung der Lage und/oder Breite der Ritznute eines ein oder mehrere Vorritzsägeblätter umfassenden Vorritzaggregates einer Kreissäge. Die Steuerung der Kreissäge bewirkt aufgrund mindestens eines Parameters des Hauptsägeblattes eine entsprechende Positionierung des Vorritzsägeblattes beziehungsweise der Vorritzsägeblätter.

Die WO 2010/059786 A1 beschreibt verschiedene Sicherheitssysteme für Elektrowerkzeuge und insbesondere Tischkreissägen. Die beschriebenen Sicherheitssysteme umfassen Erfassungssysteme zum Erfassen eines gefährlichen Zustands in Bezug auf ein Blatt des Elektrowerkzeugs, Reaktionssysteme zum Ergreifen von Minderungsmaßnahmen als Reaktion auf das Erkennen eines gefährlichen Zustands.

Die EP 2 218 533 A1 beschreibt ein Bauteil zur lösbaren Befestigung an einer, vorzugsweise motorisierten, Handschneidevorrichtung, insbesondere Motorsäge, welches mit einer Meßvorrichtung versehen ist.

Die US 3923 126 A beschreibt trägheits-manuell betätigende Sicherheitsbremse für eine Kettensäge, bei der ein mechanischer Integrator zwischen Beschleunigungen mit relativ langer Dauer unterscheidet, die durch einen "Kickback" erzeugt werden, der einen Impuls erzeugt, und normalen Betriebsbeschleunigungen, die mit Betriebs- und Vibrationskräften verbunden sind.

Die WO 01/26064 A2 beschreibt Sicherheitssysteme, die ein Erfassungssystem umfassen, das angepasst ist, um einen gefährlichen Zustand zwischen einer Person und einem Arbeitsabschnitt einer Maschine zu erfassen, wie beispielsweise einen versehentlichen Kontakt mit dem Arbeitsabschnitt, und ein dem Erfassungssystem zugeordnetes Reaktionssystem, um eine vorbestimmte Aktion zu bewirken relativ zum Arbeitsabschnitt bei Erkennung des gefährlichen Zustands durch das Erkennungssystem.

Die WO 2009/032314 A1 beschreibt ein Elektrowerkzeug gemäß dem Oberbegriff der Patentansprüche 1 und 2, einem Gehäuse und einer Motoranordnung in dem Gehäuse. Ein Schalter kann eine erste und eine zweite Einstellung haben. Die erste Einstellung kann einem ersten Betriebszustand einer Anti-Kickback-Steuervorrichtung entsprechen. Die zweite Einstellung kann einem zweiten Betriebszustand der Anti-Kickback-Steuervorrichtung entsprechen.

Eine Aufgabe der Erfindung besteht darin, das eingangs genannte Elektrowerkzeug so zu modifizieren, dass die Benutzbarkeit des Elektrowerkzeugs verbessert wird.

Die Aufgabe wird durch ein Elektrowerkzeug gemäß Anspruch 1 und durch ein Elektrowerkzeug gemäß Anspruch 2 gelöst.

Die Steuereinrichtung ist demnach in der Lage, eine aus wenigstens zwei verschiedenen Erkennungsfunktionen zu bestimmen, um das Kickback-Ereignis zu erkennen. Der Steuereinrichtung stehen also verschiedene Erkennungsfunktionen zur Verfügung, die sie verwenden kann. Die Steuereinrichtung bestimmt eine dieser Erkennungsfunktionen und verwendet die bestimmte Erkennungsfunktion, um die Erkennung des Kickback-Ereignisses durchzuführen.

Dadurch, dass der Steuereinrichtung verschiedene Erkennungsfunktionen zur Verfügung stehen und eine der Erkennungsfunktionen auf Basis der Funktionsbestimmungsinformation bestimmt wird, kann ermöglicht werden, dass die in Hinblick auf einen aktuellen Betriebs- und/oder Umgebungszustand optimale Erkennungsfunktion verwendet wird. Beispielsweise kann die Funktionsbestimmungsinformation (und damit die zu verwendende Erkennungsfunktion) basierend darauf bereitgestellt werden, welcher Benutzer das Elektrowerkzeug benutzt, was für ein Werkzeug verwendet wird und/oder was für ein Werkstück bearbeitet werden soll.

Handelt es sich bei dem aktuellen Benutzer beispielsweise um einen besonders unerfahrenen Benutzer, so kann eine besonders empfindliche bzw. sensitive Erkennungsfunktion bestimmt werden, um zu gewährleisten, dass insbesondere auch schwache Kickbacks von der Steuereinrichtung erkannt werden. Bei einem besonders erfahrenen Benutzer bietet es sich hingegen an, eine besonders unempfindliche Erkennungsfunktion zu bestimmen, so dass nur besonders starke Kickbacks erkannt werden und eine unnötige Unterbrechung der Bearbeitung vermieden wird.

Durch die wahlweise Bestimmung einer Erkennungsfunktion aus wenigstens zwei voneinander verschiedenen Erkennungsfunktionen kann daher die Benutzbarkeit des Elektrowerkzeugs verbessert werden.

Zweckmäßigerweise ist die Steuereinrichtung ausgebildet, für die Erkennung des Kickback-Ereignisses nur eine - nämlich die zuvor bestimmte - Erkennungsfunktion zu verwenden. Dies bedeutet, dass die Steuereinrichtung vorzugsweise ausgebildet ist, zur Erkennung des Kickback-Ereignisses entweder nur die erste oder nur die zweite Erkennungsfunktion zu verwenden.

Vorteilhafte Weiterbildungen sind Gegenstand der Unteransprüche.

Die Erfindung betrifft ferner ein System, das das vorstehend diskutierte Elektrowerkzeug sowie eine externe Vorrichtung, insbesondere einen Server, umfasst. Das Elektrowerkzeug ist ausgebildet, an die externe Vorrichtung eine Betriebs- und/oder Umgebungsinformation und/oder eine Benutzeridentifizierungsinformation zu übertragen. Die externe Vorrichtung ist ausgebildet, basierend auf der Betriebs- und/oder Umgebungsinformation und/oder der Benutzeridentifizierungsinformation eine Funktionsbestimmungsinformation bereitzustellen und diese an das Elektrowerkzeug zu übertragen.

Die Erfindung sieht ferner ein Verfahren gemäß Anspruch 14 und ein Verfahren gemäß Anspruch 15 vor. Zweckmäßigerweise wird das Verfahren mit einem hier beschriebenen Elektrowerkzeug durchgeführt.

Weitere exemplarische Details sowie beispielhafte Ausführungsformen werden nachstehend unter Bezugnahme auf die Zeichnung erläutert. Dabei zeigt
- Figur 1: eine schematische Darstellung eines Elektrowerkzeugs,
- Figur 2: ein Diagramm zur Illustration einer Kickback-Erkennung basierend auf einer Richtung einer mechanischen Vektorgröße,
- Figur 3: eine Schnittdarstellung eines Elektrowerkzeugs,
- Figur 4: eine Schnittdarstellung einer Abtriebswelle und zwei Lagern des Elektrowerkzeugs,
- Figur 5: eine schematische Darstellung eines Elektrowerkzeugs, und
- Figur 6: ein Blockdiagramm eines Verfahrens.

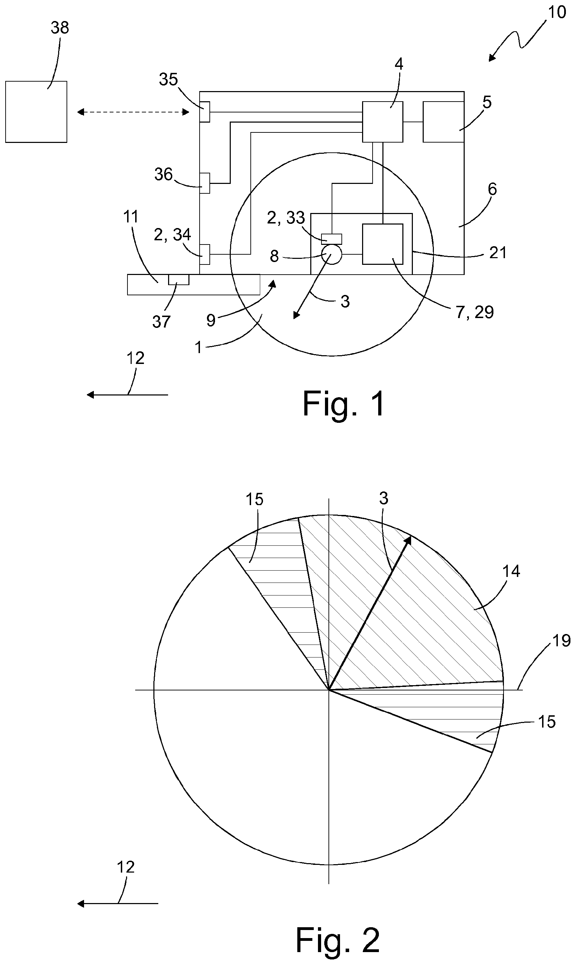

Die Figur 1 zeigt ein Elektrowerkzeug 10 gemäß einer ersten Ausführungsform.

Das Elektrowerkzeug 10 verfügt über ein exemplarisch als Sägeblatt ausgebildetes rotierbares Werkzeug 1. Alternativ kann das Werkzeug 1 auch als Fräser ausgebildet sein. Das Elektrowerkzeug 10 umfasst eine Sensoreinrichtung 2 zur Erfassung einer mechanischen Größe 3. Die mechanische Größe 3 umfasst eine Kraft, eine Beschleunigung, eine Geschwindigkeit, eine Auslenkung, eine Deformation und/oder eine mechanische Spannung. Die mechanische Größe 3 hängt von einer vom Werkzeug 1 ausgehenden Kraft ab. Das Elektrowerkzeug verfügt ferner über eine mit der Sensoreinrichtung 2 kommunikativ gekoppelte Steuereinrichtung 4. Die Steuereinrichtung 4 ist ausgebildet, basierend auf der erfassten mechanischen Größe 3 ein Kickback-Ereignis zu erkennen.

Die Steuereinrichtung 4 ist ausgebildet, basierend auf einer Funktionsbestimmungsinformation wahlweise eine erste Erkennungsfunktion oder eine von der ersten Erkennungsfunktion verschiedene zweite Erkennungsfunktion zu bestimmen. Die Steuereinrichtung 4 ist ferner ausgebildet, die auf der erfassten mechanischen Größe basierende Erkennung des Kickback-Ereignisses unter Verwendung der bestimmten Erkennungsfunktion durchzuführen.

Dadurch, dass die Steuereinrichtung 4 in der Lage ist, aus mehreren verfügbaren Erkennungsfunktionen eine Erkennungsfunktion zu bestimmen und diese zur Erkennung des Kickback-Ereignisses zu verwenden, wird es grundsätzlich möglich, ein für einen aktuellen Zustand möglichst geeignete Erkennungsfunktion zu verwenden und auf diese Weise die Benutzbarkeit des Elektrowerkzeugs 10 zu verbessern.

Im Folgenden werden exemplarische Details des Elektrowerkzeugs 10 sowie weitere beispielhafte Ausführungsformen erläutert.

Bei dem Elektrowerkzeug 10 handelt es sich vorzugsweise um eine Säge, insbesondere um eine Handkreissäge oder eine Tauchsäge. Das Elektrowerkzeug 10 kann ferner auch als Flachdübelfräse ausgebildet sein. Das Werkzeug 1 ist insbesondere kreisförmig und dreht sich im Betrieb exemplarisch im Uhrzeigersinn.

Exemplarisch verfügt das Elektrowerkzeug 10 über ein Gehäuse 6, in dem insbesondere die Sensoreinrichtung 2 und die Steuereinrichtung 4 angeordnet sind. Die Steuereinrichtung 4 ist beispielsweise als Mikrocontroller ausgebildet. An dem Gehäuse 6 ist eine Auflagefläche 9 vorgesehen, mit der das Elektrowerkzeug 10 auf ein zu bearbeitendes Werkstück 11 aufgelegt werden kann.

Das Elektrowerkzeug 10 verfügt über eine Antriebseinrichtung 7. Die Antriebseinrichtung 7 umfasst beispielsweise einen Elektromotor und ein Getriebe. Die Antriebseinrichtung 7 wird vorzugsweise von der Steuereinrichtung 4 angesteuert. Das Elektrowerkzeug 10 verfügt ferner über eine Abtriebswelle 8, die durch die Antriebseinrichtung 7 angetrieben werden kann. Das Werkzeug 1 ist mechanisch mit der Abtriebswelle 8 gekoppelt. Zweckmäßigerweise ist das Werkzeug 1 an der Abtriebswelle 8 befestigt.

Wie in der Figur 1 gezeigt, liegt das Elektrowerkzeug 10 bei der Bearbeitung des Werkstücks 11 typischerweise mit der Auflagefläche 9 auf dem Werkstück 11 auf und wird in einer Vorschubrichtung 12 relativ zum Werkstück 11 bewegt. Exemplarisch sägen die Sägezähne des als Sägeblatt ausgebildeten Werkzeugs 1 dabei von unten nach oben in das Werkstück 11. In dieser Konstellation drängt das Werkzeug 1 relativ zum restlichen Elektrowerkzeug 10 exemplarisch in Richtung der eingezeichneten mechanischen Größe 3, also schräg nach unten. Die von dem Sägeblatt 1 ausgehende Kraft zeigt insbesondere in die Richtung der mechanischen Größe 3.

Das Elektrowerkzeug 10 verfügt ferner über eine Tragstruktur 21, die zweckmäßigerweise im Gehäuse 6 angeordnet ist. An der Tragstruktur 21 ist beispielsweise die Abtriebswelle 8 gelagert. Ferner kann die Tragstruktur 21 als Gehäuse für die Antriebseinrichtung 7 ausgebildet sein. Die Tragstruktur 21 kann beispielsweise ein Antriebsgehäuse, insbesondere ein Getriebegehäuse darstellen oder umfassen.

Exemplarisch verfügt das Elektrowerkzeug 10 ferner über eine Benutzereingabeeinrichtung 5. Mittels der Benutzereingabeeinrichtung 5 kann der Benutzer eine Benutzereingabe vornehmen, beispielsweise um das Elektrowerkzeug 10 ein- und ausschalten und/oder konfigurieren und/oder kalibrieren.

Ferner verfügt das Elektrowerkzeug 10 exemplarisch über eine Kommunikationsschnittstelle 35. Die Kommunikationsschnittstelle 35 dient zur Kommunikation mit einer externen Vorrichtung 38, insbesondere einem externen Server und/oder einem Mobilgerät. Die Kommunikationsschnittstelle 35 ist insbesondere zur drahtlosen und/oder drahtgebundenen Kommunikation ausgebildet. Beispielsweise ist die Kommunikationsschnittstelle 35 ausgebildet, über Ethernet, WLAN, Bluetooth und/oder NFC zu kommunizieren.

Ferner verfügt das Elektrowerkzeug 10 exemplarisch über eine Benutzeridentifizierungseinrichtung 36. Die Benutzeridentifizierungseinrichtung 36 ist ausgebildet, eine Benutzeridentifizierungsinformation, zweckmäßigerweise eine Eigenschaft, insbesondere eine biometrische Eigenschaft, eines Benutzers zu erfassen um so eine Identifizierung des Benutzers, beispielsweise durch die Steuereinrichtung 4, zu ermöglichen.

Die Benutzeridentifizierungseinrichtung 36 verfügt beispielsweise über einen Fingerabdruckscanner und/oder einen Bildsensor.

Die Sensoreinrichtung 2 verfügt exemplarisch über zwei Sensoreinheiten 33, 34. Die bereits erwähnte Erfassung der mechanischen Größe 3 erfolgt exemplarisch durch die erste Sensoreinheit 33. In der Figur 1 ist die Sensoreinrichtung 2 bzw. die erste Sensoreinheit 33 exemplarisch mit der Abtriebswelle 8 gekoppelt und ausgebildet, die mechanische Größe 3 - nämlich eine Kraft, Beschleunigung, Geschwindigkeit, Auslenkung, Deformation und/oder mechanische Spannung - der Abtriebswelle 8 zu erfassen. Bei der erfassten mechanischen Größe 3 handelt es sich um eine Vektorgröße. Vorzugsweise ist die Sensoreinrichtung 2 ausgebildet, die mechanische Größe 3 kontinuierlich zu erfassen, so dass eine Änderung, insbesondere eine Richtungsänderung der mechanischen Größe 3 erfasst werden kann.

Die Sensoreinrichtung 2 ist vorzugsweise zudem ausgebildet, eine Betriebs- und/oder Umgebungsinformation zu erfassen. Zu diesem Zweck verfügt die Sensoreinrichtung 2 in der Figur 1 optional über die zweite Sensoreinheit 34. Alternativ oder zusätzlich dazu ist es auch möglich, zur Erfassung einer Betriebs- und/oder Umgebungsinformation die erste Sensoreinheit 33 zu verwenden.

Bei der Betriebs- und/oder Umgebungsinformation handelt es sich beispielsweise um eine Eigenschaft des Werkzeugs 1, zum Beispiel den Typ und/oder einen Verschleißzustand des Werkzeugs 1.

Beispielsweise kann die Sensoreinrichtung 2 als die zweite Sensoreinheit 34 einen Bildsensor umfassen, mit dem ein Bild des Werkzeugs 1, insbesondere einer auf dem Werkzeug 1 angebrachten Markierung, beispielsweise einer Typenbezeichnung, aufgenommen werden kann. Basierend auf dem aufgenommenen Bild kann dann die Steuereinrichtung 4 den Typ des Werkzeugs 1 feststellen.

Zur Bestimmung eines Verschleißzustands des Werkzeugs 1 kann die Steuereinrichtung 4 beispielsweise ausgebildet sein, die mechanische Größe 3 als mechanische Vektorgröße zu erfassen und bei einer bestimmten Richtung und/oder Richtungsänderung der mechanischen Vektorgröße auf den Verschleißzustand zu schließen. Alternativ oder zusätzlich dazu kann die Steuereinrichtung 4 ausgebildet sein, die erfasste mechanische Größe 3 über einen größeren Zeitraum bzw. eine Vielzahl an Einsätzen des Elektrowerkzeugs 10 hinweg wiederholt zu erfassen und eine statistische Auswertung der Erfassungen vorzunehmen, aus der dann auf den Verschleißzustand geschlossen werden kann, beispielsweise anhand einer Tendenz bzw. Entwicklung oder einer Abweichung eines Mittelwerts.

Ferner kann als eine Betriebs- und/oder Umgebungsinformation eine Eigenschaft des mit dem Werkzeug 1 zu bearbeitenden Werkstücks 11 erfasst werden. Beispielsweise kann ein Bild des Werkstücks 11, insbesondere einer auf dem Werkstück 11 angebrachten Markierung 37, beispielsweise einer Typenbezeichnung, aufgenommen werden. Basierend auf dem aufgenommenen Bild kann dann die Steuereinrichtung 4 den Typ des Werkstücks 11 feststellen.

Ferner kann die erfasste Betriebs- und/oder Umgebungsinformation eine Temperatur und/oder eine Luftfeuchtigkeit umfassen. Die Sensoreinrichtung 2 kann beispielsweise als die zweite Sensoreinheit 34 einen Temperatursensor und/oder einen Luftfeuchtigkeitssensor umfassen.

Im gezeigten Beispiel handelt es sich bei der zweiten Sensoreinheit 34 und der Benutzeridentifizierungseinrichtung 36 um zwei verschiedene Einheiten. Alternativ dazu - insbesondere dann, wenn sowohl die Sensoreinheit 34 als auch die Benutzeridentifizierungseinrichtung 36 zur Aufnahme eines Bildes dienen - kann es sich bei der Sensoreinheit 34 und der Benutzeridentifizierungseinrichtung 36 auch um ein und dieselbe Einheit handeln.

Nachstehend werden die beiden Erkennungsfunktionen und insbesondere der Unterschied zwischen den Erkennungsfunktionen näher erläutert.

Im einfachsten Fall kann es sich bei den Erkennungsfunktionen jeweils um einen von der Steuereinrichtung 4 durchgeführten Vergleich der mechanischen Größe 3 mit einem jeweiligen Schwellenwert handeln. Beispielsweise wird die mechanische Größe 3 als Skalar erfasst und mit einem jeweiligen skalaren Schwellenwert verglichen. Alternativ oder zusätzlich dazu wird erfindungsgemäß die mechanische Größe 3 als Vektorgröße erfasst. Der Betrag der Vektorgröße kann mit einem jeweiligen Schwellenwert verglichen werden. Wird der Schwellenwert überschritten, so schließt die Steuereinrichtung 4 auf ein Kickback-Ereignis.

Jeder Erkennungsfunktion ist dabei zweckmäßigerweise ein anderer Schwellenwert zugehörig. Beispielsweise ist der Schwellenwert der ersten Erkennungsfunktion größer als der Schwellenwert der zweiten Erkennungsfunktion.

Vorzugsweise ist die zweite Erkennungsfunktion sensitiver bzw. empfindlicher als die erste Erkennungsfunktion. Dies bedeutet, dass bei Verwendung der zweiten Erkennungsfunktion ein größerer Wertebereich der erfassten mechanischen Größe 3 zu der Erkennung eines Kickback-Ereignisses führt als bei der ersten Erkennungsfunktion.

Die zweite Erkennungsfunktion ist daher beispielsweise besser geeignet für weniger geübte Benutzer des Elektrowerkzeugs, da die zweite Erkennnungsfunktion eine größere Bandbreite an Kickbacks - insbesondere auch schwächere Kickbacks - erkennt. Die erste Erkennungsfunktion hingegen ist beispielsweise besser geeignet für geübte bzw. sehr erfahrene Benutzer des Elektrowerkzeugs 10, die mit schwächeren Kickbacks auch ohne Unterstützung durch das Elektrowerkzeug 10 umgehen können. Da die erste Erkennungsfunktion schwächere Kickbacks nicht erkennt bzw. ignoriert, kann durch die Verwendung der ersten Erkennungsfunktion verhindert werden, dass es für einen geübten bzw. sehr erfahrenen Benutzer durch die Kickback-Erkennung zu unnötigen und störenden Unterbrechungen des Bearbeitungsvorgangs kommt.

Wie vorstehend bereits erwähnt, wird erfindungsgemäß die mechanische Größe 3 als Vektorgröße erfasst. Das Kickback-Ereignis kann in diesem Fall basierend auf einer Richtung und/oder einer Richtungsänderung der Vektorgröße erkannt werden. Beispielsweise ist die Steuereinrichtung 4 ausgebildet, festzustellen, ob die Richtung einer als Vektorgröße erfassten mechanischen Größe 3 innerhalb oder außerhalb eines bestimmten Richtungsbereich liegt und basierend auf dieser Feststellung zu entscheiden, ob das Kickback-Ereignis vorliegt oder nicht.

Unter Bezugnahme auf die Figur 2 wird nachstehend eine auf einer Vektorgröße basierende Erkennung des Kickback-Ereignisses näher erläutert.

Die Figur 2 zeigt ein Diagramm mit verschiedenen Richtungsbereichen 14, 15 und der erfassten mechanischen Größe 3.

Das Diagramm ist in vier Quadranten aufgeteilt. Jeder Quadrant umfasst 90 Grad. Das Bezugszeichen 19 kennzeichnet die Null-Grad-Linie. Die nachstehend erwähnten Winkelkoordinaten bzw. Gradzahlen sind im mathematisch positiven Drehsinn (Gegenuhrzeigersinn) zu verstehen. Zweckmäßigerweise verläuft die Null-Grad-Linie parallel zur Auflagefläche 9 und/oder zur Vorschubrichtung 12.

Bei den Richtungsbereichen 14, 15 handelt es sich exemplarisch um zweidimensionale Richtungsbereiche. Die Richtungsbereiche 14, 15 können auch als Winkelbereiche bezeichnet werden. Zweckmäßigerweise liegen die Richtungsbereiche 14, 15 in einer Ebene. Die Ebene ist zweckmäßigerweise parallel zur Ebene des Werkzeugs 1 bzw. senkrecht zur Axialrichtung der Abtriebswelle 8 ausgerichtet.

Die beiden Richtungsbereiche 14, 15 unterscheiden sich voneinander. Exemplarisch liegt der erste Richtungsbereich 14 innerhalb des zweiten Richtungsbereichs 15. Der erste Richtungsbereich 14 ist zweckmäßigerweise kleiner als der zweite Richtungsbereich 15.

Zweckmäßigerweise ist der erste Richtungsbereich 14 der ersten Erkennungsfunktion zugehörig. Die erste Erkennungsfunktion umfasst insbesondere einen Vergleich einer Richtung der mechanischen Vektorgröße mit dem ersten Richtungsbereich 14. Ferner ist der zweite Richtungsreicht 15 zweckmäßigerweise der zweiten Erkennungsfunktion zugehörig. Die zweite Erkennungsfunktion umfasst insbesondere einen Vergleich der Richtung der mechanischen Vektorgröße mit dem zweiten Richtungsbereich 15.

Die Steuereinrichtung 4 ist zweckmäßigerweise ausgebildet, den ersten Richtungsbereich 14 und den zweiten Richtungsbereich 15 bereitzustellen. Beispielsweise sind beide Richtungsbereiche in einem Speicher in der Steuereinrichtung 4 abgespeichert. Alternativ oder zusätzlich dazu kann die Steuereinrichtung 4 auch ausgebildet sein, die Richtungsbereiche 14, 15 selbst zu erzeugen.

Der erste Richtungsbereich 14 stellt einen Richtungsbereich dar, in dem die mechanische Vektorgröße liegt, wenn mit sehr hoher Wahrscheinlichkeit ein Kickback vorliegt bzw. unmittelbar bevorsteht. Exemplarisch befindet sich der erste Richtungsbereich 14 in den beiden oberen Quadranten, also innerhalb eines Bereichs zwischen 0 Grad und 180 Grad. In dem gezeigten Beispiel erstreckt sich der erste Richtungsbereich 14 von 5 Grad bis 100 Grad. Verwendet die Steuereinrichtung 4 die erste Erkennungsfunktion, so wird das Kickback-Ereignis erkannt, wenn die mechanische Vektorgröße 3 in dem ersten Richtungsbereich 14 liegt.

Der zweite Richtungsbereich 15 ist gegenüber dem ersten Richtungsbereich 14 vergrößert. Exemplarisch befindet sich der zweite Richtungsbereich 15 in dem ersten, zweiten und vierten Quadranten, also innerhalb eines Bereichs zwischen 270 Grad (bzw. -90 Grad) und 180 Grad. In dem gezeigten Beispiel erstreckt sich der zweite Richtungsbereich 15 von 340 Grad (bzw. -20 Grad) bis 120 Grad. Der zweite Richtungsbereich 15 umfasst nicht nur Richtungen, bei denen mit sehr hoher Wahrscheinlichkeit von einem Kickback ausgegangen werden kann, sondern darüber hinaus auch Richtungen, bei denen ein Kickback immer noch möglich, aber weniger wahrscheinlich als im ersten Richtungsbereich 14 ist. Insbesondere umfasst der zweite Richtungsbereich 15 auch Richtungen, in denen die Ursache bzw. ein erster Indikator für den Kickback bereits gegeben ist, das Elektrowerkzeug 10 oder das Werkstück 11 jedoch noch nicht signifikant beschleunigt wurden bzw. noch keinen Rückstoß oder Rückschlag ausgeübt haben. Zweckmäßigerweise kann die Steuereinrichtung ausgebildet sein, das Kickback-Ereignis bei Verwendung des zweiten Richtungsbereichs 15 50 bis 100 ms vor einer (ohne Erkennung und Reaktion auf den Kickback) auftretenden Beschleunigung des Elektrowerkzeugs 10 gegenüber dem Werkstück 11 zu erkennen. Bei der Beschleunigung handelt es sich beispielsweise um eine Beschleunigung mit einer Komponente nach oben bzw. einer Komponente in 90-Grad-Richtung in dem gezeigten Diagramm.

Zweckmäßigerweise ist die Steuereinrichtung ausgebildet, zu erkennen, dass kein Kickback-Ereignis vorliegt, wenn die mechanische Größe 3 außerhalb des ersten Richtungsbereichs 14 oder des zweiten Richtungsbereichs 15 liegt.

Alternativ oder zusätzlich zu der vorstehend beschriebenen Erkennung des Kickback-Ereignisses basierend auf der Richtung der erfassten mechanischen Vektorgröße ist es auch möglich, das Kickback-Ereignis basierend auf einer Richtungsänderung der mechanischen Vektorgröße durchzuführen.

Die erste und zweite Erkennungsfunktion können dementsprechend einen Vergleich einer Richtungsänderung, insbesondere einer Winkelgeschwindigkeit und/oder einem Änderungswinkel, der mechanischen Vektorgröße mit einem jeweiligen Richtungsänderungs-Schwellenwert umfassen.

Steht ein Kickback unmittelbar bevor, so dreht sich die mechanische Vektorgröße in Richtung hin zu dem ersten Richtungsbereich 14. Die Erkennungsfunktionen können dementsprechend eine erfasste Drehung der mechanischen Vektorgröße bei der Erkennung des Kickback-Ereignisses berücksichtigen. Beispielsweise ist die Steuereinrichtung 4 ausgebildet, die Winkelgeschwindigkeit der mechanischen Vektorgröße mit einem Geschwindigkeitsschwellenwert zu vergleichen und bei Überschreiten des Geschwindigkeitsschwellenwerts das Kickback-Ereignis zu erkennen. Bei der ersten Erkennungsfunktion kann dabei ein anderer, insbesondere ein größerer Geschwindigkeitsschwellenwert verwendet werden als bei der zweiten Erkennungsfunktion.

Ferner kann die Steuereinrichtung 4 ausgebildet sein, zu bestimmen, um welchen Änderungswinkel sich die mechanische Vektorgröße 3 insbesondere innerhalb eines bestimmten Zeitfensters geändert hat und diesen Änderungswinkel mit einem Winkelschwellenwert zu vergleichen, um das Kickback-Ereignis zu erkennen. Bei der ersten Erkennungsfunktion kann dabei ein anderer, insbesondere ein größerer Winkelschwellenwert verwendet werden als bei der zweiten Erkennungsfunktion.

Zudem können die Erkennungsfunktionen die Zeitdauer berücksichtigen, mit der die mechanische Vektorgröße 3 innerhalb eines bestimmten Richtungsbereichs 14, 15 liegt. Beispielsweise kann die Steuereinrichtung 4 ausgebildet sein, das Kickback-Ereignis nur dann zu erkennen, wenn die mechanische Vektorgröße länger als ein bestimmter Zeitschwellenwert in einem bestimmten Richtungsbereich 14, 15 liegt. Bei der ersten Erkennungsfunktion kann dabei ein anderer, insbesondere ein größerer Zeitschwellenwert verwendet werden als bei der zweiten Erkennungsfunktion.

Die vorstehend erläuterten konkreten Winkelangaben der Richtungsbereiche 14, 15 sind rein exemplarisch zu verstehen. Je nach Typ und Aufbau des Elektrowerkzeugs 10 können die tatsächlichen Winkel variieren. Die tatsächlichen Winkel der Richtungsbereiche 14, 15 können mittels Kalibrierung ermittelt werden. Die Kalibrierung kann beispielsweise bei der Entwicklung oder Herstellung des Elektrowerkzeugs und/oder durch den Benutzer erfolgen.

Zweckmäßigerweise ist die Steuereinrichtung 4 ausgebildet, eine Kalibrierung eines oder mehrerer Richtungsbereiche 14, 15 vorzunehmen. Beispielsweise kann mittels der Benutzerschnittstelle 5 die Kalibrierung initiiert werden. Die Steuereinrichtung 4 kann daraufhin über die Antriebseinrichtung 7 das Werkzeug 1 antreiben und dabei über die Sensoreinrichtung 2 die mechanische Vektorgröße 3 erfassen. Basierend auf der erfassten mechanischen Vektorgröße 3 kann die Steuereinrichtung 4 dann einen Richtungsbereich und/oder einen oder mehrere Schwellenwerte erstellen und in einem Speicher der Steuereinrichtung 2 hinterlegen.

Nachfolgend wird exemplarisch erläutert, wie die zu verwendende Erkennungsfunktion bestimmt werden kann.

Grundsätzlich bestimmt die Steuereinrichtung 4 die zu verwendende Erkennungsfunktion basierend auf der Funktionsbestimmungsinformation. Die Funktionsbestimmungsinformation wird der Steuereinrichtung 4 entweder von extern bereitgestellt oder in der Steuereinrichtung 4 erstellt.

Beispielsweise kann die Funktionsbestimmungsinformation über die Benutzereingabeeinrichtung 5 eingegeben werden. Exemplarisch kann ein Benutzer über die Benutzereingabeeinrichtung 5 zwischen zwei verschiedenen Sicherheitsprofilen - z.B. einem Anfänger-Profil und einem Profi-Profil - wählen. Gemäß der Eingabe bzw. Wahl des Benutzers verwendet dann die Steuereinrichtung 4 entweder die erste Erkennungsfunktion oder die zweite Erkennungsfunktion.

Ferner kann die Steuereinrichtung 4 die Funktionsbestimmungsinformation über die Kommunikationsschnittstelle 35 empfangen. Beispielsweise kann die Steuereinrichtung 4 über die Kommunikationsschnittstelle mit einer externen Vorrichtung 3, beispielsweise einem Server oder einem Mobilgerät, kommunizieren und von dieser externen Vorrichtung 3 die Funktionsbestimmungsinformation bereitgestellt bekommen. Gemäß der empfangenen Funktionsbestimmungsinformation verwendet die Steuereinrichtung dann entweder die erste Erkennungsfunktion oder die zweite Erkennungsfunktion.

Exemplarisch kann die Funktionsbestimmungsinformation auch in der Steuereinrichtung 4 bereitgestellt werden. Beispielsweise ist die Steuereinrichtung 4 ausgebildet, mittels der Benutzeridentifizierungseinrichtung 36 einen Benutzer zu identifizieren und die Funktionsbestimmungsinformation gemäß der Identifizierung bereitzustellen. Beispielsweise kann in der Steuereinrichtung 4 eine Zuordnung zwischen verschiedenen Benutzern und den Erkennungsfunktionen abgelegt sein, so dass bei erfolgter Identifizierung des Benutzers die zugehörige Erkennungsfunktion gewählt und verwendet werden kann.

Exemplarisch ist die Steuereinrichtung ferner ausgebildet, die Funktionsbestimmungsinformation basierend auf einer durch die Sensoreinrichtung 2, insbesondere der zweiten Sensoreinheit 34, erfassten Betriebs- und/oder Umgebungsinformation bereitzustellen. Beispielsweise kann die Steuereinrichtung 2 mittels der Sensoreinrichtung 2 einen Zustand des Werkzeugs, Werkstücks und/oder der Umgebung feststellen und basierend darauf die zu verwendende Erkennungsfunktion bestimmen.

Es ist ferner auch möglich, dass die Steuereinrichtung 4 zur Identifizierung des Benutzers und/oder zur Bereitstellung der Funktionsbestimmungsinformation über die Kommunikationsschnittstelle 35 mit der externen Vorrichtung 38, insbesondere dem Server oder Mobilgerät, kooperiert. Das Elektrowerkzeug 10 und die externe Vorrichtung 38 können in diesem Fall zusammen ein System bilden. Das Elektrowerkzeug 10 ist beispielsweise ausgebildet, an die externe Vorrichtung 38 eine Betriebs- und/oder Umgebungsinformation und/oder eine Benutzeridentifizierungsinformation zu übertragen. Zweckmäßigerweise ist die externe Vorrichtung 38 ausgebildet, basierend auf der Betriebs- und/oder Umgebungsinformation und/oder der Benutzeridentifizierungsinformation die Funktionsbestimmungsinformation bereitzustellen und an das Elektrowerkzeug zu übertragen.

Beispielsweise kann als die Benutzeridentifizierungsinformation eine mit der Benutzeridentifizierungseinrichtung aufgenommene Information, beispielsweise eine biometrische Information, an die externe Vorrichtung 38 übertragen werden. In der externen Vorrichtung 38 kann dann, beispielsweise unter Rückgriff auf eine dort hinterlegte Datenbank, eine Benutzeridentität und/oder eine Funktionsbestimmungsinformation bestimmt werden. Die Benutzeridentität und/oder die Funktionsbestimmungsinformation kann dann über die Kommunikationsschnittstelle 35 an die Steuereinrichtung 4 zur weiteren Verwendung übertragen werden.

In der vorstehenden Diskussion werden stets zwei Erkennungsfunktionen erwähnt. Selbstverständlich können der Steuereinrichtung 4 aber auch mehr als zwei verschiedene Erkennungsfunktionen zur Erkennung des Kickback-Ereignisses zur Verfügung stehen.

Die der Steuereinrichtung 4 zur Verfügung stehenden Erkennungsfunktionen können beispielsweise in einem Speicher der Steuereinrichtung 4 gespeichert sein. Gemäß der Funktionsbestimmungsinformation wählt die Steuereinrichtung 4 dann eine Erkennungsfunktion aus und verwendet diese, um ein Kickback-Ereignis zu erkennen. Die Funktionsbestimmungsinformation kann in diesem Fall z.B. die Information umfassen, welche Erkennungsfunktion verwendet werden soll.

Alternativ oder zusätzlich dazu kann die Steuereinrichtung 4 eine zu verwendende Erkennungsfunktion auch selbst erstellen, zweckmäßigerweise basierend auf der Funktionsbestimmungsinformation. Die Funktionsbestimmungsinformation kann beispielsweise einen für die Erkennungsfunktion zu verwendenden Parameter, beispielsweise einen Schwellenwert, und/oder einen zu verwendenden mathematischen Operator spezifizieren.

Nachstehend werden exemplarische Möglichkeiten erläutert, wie die mechanische Größe 3 als Vektorgröße erfasst werden kann.

Die Sensoreinrichtung 2 ist zweckmäßigerweise ausgebildet, die mechanische Vektorgröße 3 als wenigstens zweidimensionalen Vektor zu erfassen. Zu diesem Zweck ist die Sensoreinrichtung 2 ausgebildet, die der mechanischen Vektorgröße 3 zugrunde liegende mechanische Größe in wenigstens zwei verschiedenen Raumrichtungen zu messen. Bei den beiden Raumrichtungen handelt es sich beispielsweise um eine Raumrichtung, die parallel zur Vorschubrichtung 12 verläuft und eine Raumrichtung, die senkrecht zur Vorschubrichtung 12 verläuft. Zweckmäßigerweise sind beide Raumrichtungen senkrecht zur Axialrichtung der Abtriebswelle 8. Beispielsweise verfügt die Sensoreinrichtung 2 über wenigstens zwei Sensorelemente 25, 26. Zweckmäßigerweise dient jedes der Sensorelemente 25, 26 dazu, die zugrunde liegende mechanische Größe - also eine Kraft, eine Beschleunigung, eine Geschwindigkeit, eine Auslenkung, eine Deformation und/oder eine mechanische Spannung, in einer anderen Raumrichtung zu messen.

Die mechanische Vektorgröße 3 ist insbesondere ein Kraftvektor, ein Beschleunigungsvektor, ein Geschwindigkeitsvektor, ein Auslenkungsvektor, ein Deformationsvektor und/oder ein mechanischer Spannungsvektor oder Spannungstensor. Dementsprechend kann die Sensoreinrichtung 2 ausgebildet sein, in wenigstens zwei Raumrichtungen eine Kraft, eine Beschleunigung, eine Geschwindigkeit, eine Auslenkung, eine Deformation und/oder eine mechanische Spannung zu messen.

Die Sensoreinrichtung 2 kann insbesondere ein radiales Messlager 28 umfassen, mit dem beispielsweise die Abtriebswelle 8 gelagert ist. Das radiale Messlager 28 kann ausgebildet sein, mittels Kraft- oder Spannungssensoren, beispielsweise piezoresitiven Sensoren, die Kraft zwischen der Abtriebswelle 8 und dem Messlager 28 als die mechanische Vektorgröße 3 zu erfassen.

Alternativ oder zusätzlich dazu kann die Sensoreinrichtung 2 von der Abtriebswelle 8 beabstandete Distanzsensoren umfassen, die ausgebildet sind, die Auslenkung der Abtriebswelle 8 als die mechanische Vektorgröße 8 zu erfassen.

Ferner kann die Sensoreinrichtung 2 insbesondere an der Tragstruktur 21 befestigte Spannungssensoren, insbesondere Dehnungsmessstreifen (DMS), umfassen.

Grundsätzlich kann die Sensoreinrichtung 2 eingerichtet sein, die mechanische Vektorgröße 3 an einem beliebigen Teil innerhalb des vom Werkzeug 1 ausgehenden Kraftflusses zu messen. Der Kraftfluss verläuft exemplarisch von dem Werkzeug 1 über die Abtriebswelle 8, eine Lagereinrichtung 27, die Tragstruktur 21, das Gehäuse 6 und die Auflagefläche 9 zu dem Werkstück 11. Insbesondere ist die Sensoreinrichtung 2 ausgebildet, die mechanische Vektorgröße 3 zwischen zwei im Kraftfluss hintereinander liegenden Teilen zu messen.

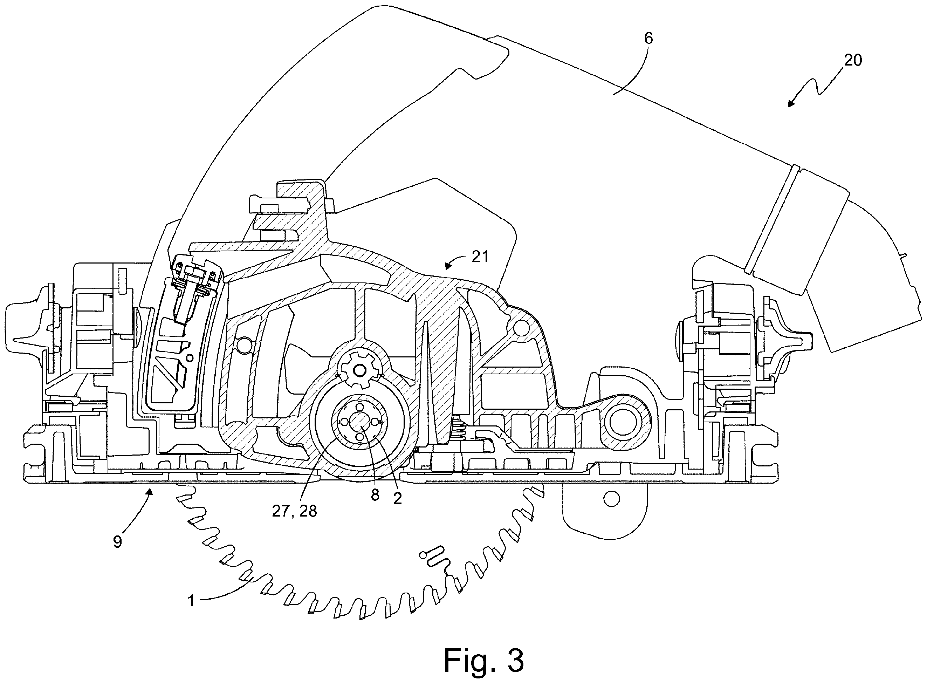

Die Figur 3 zeigt eine Schnittdarstellung des Elektrowerkzeugs 20. Die vorstehenden auf das Elektrowerkzeug 10 bezogenen Ausführungen gelten auch für das Elektrowerkzeug 20.

Wie in der Figur 3 gezeigt, umfasst das Elektrowerkzeug 20 eine Lagereinrichtung 27, die an der Tragstruktur 21 vorgesehen ist und die Abtriebswelle 8 gegenüber der Tragstruktur 21 lagert. Die Lagereinrichtung 27 umfasst zweckmäßigerweise ein oder mehrere Lager 31, 32, insbesondere Radial- und/oder Radiaxlager, vorzugsweise Kugellager.

Zweckmäßigerweise ist wenigstens ein Lager 31, 32 der Lagereinrichtung 27 als Messlager 28, insbesondere radiales Messlager, ausgebildet und kann daher als die Sensoreinrichtung 2 dienen. Vorzugsweise ist das Messlager 28 ausgebildet, eine zwischen der Abtriebswelle 8 und der Tragstruktur 21 vorliegende Kraft in wenigstens zwei verschiedenen Raumrichtungen zu messen. Beispielsweise verfügt das Messlager 28 über eine Mehrzahl von Sensorelementen, beispielsweise piezoresistiven Sensorelementen, insbesondere piezoresistiven Dünnschichtsensorelementen, die zweckmäßigerweise in Umfangsrichtung um die Abtriebswelle 8 herum angeordnet sind. Insbesondere sind die Sensorelemente an einer äußeren Lagerkomponente des Messlagers 28 - also einer relativ zur Tragstruktur 21 stationären Lagerkomponente bzw. einer sich nicht mit der Abtriebswelle 8 mitdrehenden Lagerkomponente, wie beispielsweise einem Außenring, angeordnet. Exemplarisch sind acht Sensorelemente vorgesehen, die jeweils um 45 Grad zueinander versetzt angeordnet sind.

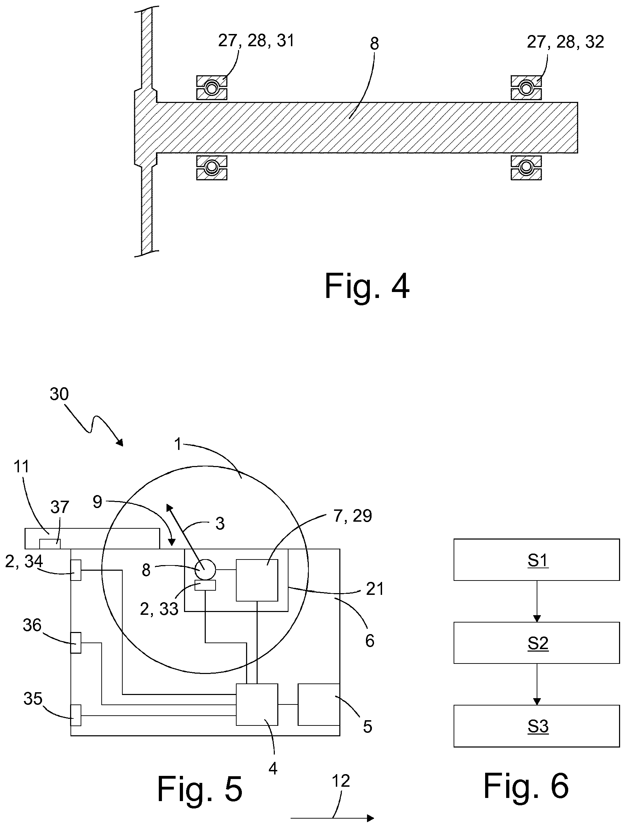

Die Figur 4 zeigt die Abtriebswelle 8 zusammen mit zwei Lagern 31, 32 der Lagereinrichtung 27. Exemplarisch ist das erste Lager 31 im Bereich eines dem Werkzeug 1 zugeordneten distalen Endes der Abtriebswelle 8 angeordnet und das zweite Lager 32 ist im Bereich eines dem Werkzeug 1 abgewandten distalen Endes der Abtriebswelle 8 angeordnet.

Zweckmäßigerweise ist eines oder beide Lager 1, 2 als das vorstehend erläuterte Messlager 28 ausgebildet.

Alternativ oder zusätzlich zu der vorstehend erläuterten Ausgestaltung, bei der die Sensoreinrichtung 2 innen in einem oder mehreren Lagern 31, 32 integriert ist, kann die Sensoreinrichtung 2 auch zwischen einem oder mehreren Lagern 31, 32 und der Tragstruktur 21 angeordnet sein.

Die Figur 5 zeigt ein Elektrowerkzeug 30 gemäß einer sechsten Ausführungsform. Das Elektrowerkzeug 30 ist hier exemplarisch als stationäre Säge, insbesondere als Tischkreissäge ausgebildet. Das Elektrowerkzeug 30 umfasst zweckmäßigerweise die vorstehend bereits im Zusammenhang mit dem Elektrowerkzeug 10 und/oder dem Elektrowerkzeug 20 diskutierten Merkmale.

Exemplarisch dreht sich das Werkzeug 1 hier in Gegenuhrzeigersinn. Zweckmäßigerweise wird das Werkstück 11 bei der Bearbeitung so in das als Sägeblatt ausgebildete Werkzeug 1 hineingeschoben, dass die Sägezähne von oben nach unten in das Werkstück 11 sägen. In der Figur 8 ist eine entsprechende Vorschubrichtung 12 eingezeichnet. Die Richtungsbereiche 14, 15 sind bei dem Elektrowerkzeug 60 entsprechend angepasst. Beispielsweise können die in der Figur 2 gezeigten Richtungsbereiche 14, 15 um den Mittelpunkt des Diagramms punktgespiegelt sein.

Im Folgenden werden verschiedene Möglichkeiten diskutiert, wie auf ein erkanntes Kickback-Ereignis reagiert werden kann. Zweckmäßigerweise kann jede dieser Möglichkeit bei jedem der vorstehend diskutierten Elektrowerkzeuge vorgesehen sein.

Vorzugsweise kann die Steuereinrichtung 4 ausgebildet sein, in Ansprechen auf das erkannte Kickback-Ereignis eine bestimmte Ansteuerung der Antriebseinrichtung 7 vorzunehmen, beispielsweise um zu bewirken, dass das Werkzeug 1 nicht mehr angetrieben wird und/oder abgebremst, insbesondere komplett abgebremst wird. Das Abbremsen kann dabei insbesondere mit demselben Elektromotor erfolgen, mit dem das Werkzeug 1 sonst angetrieben wird. Alternativ oder zusätzlich dazu kann die Antriebseinrichtung 7 ein Bremsmittel umfassen und die Steuereinrichtung 4 ausgebildet sein, in Ansprechen auf das erkannte Kickback-Ereignis das Bremsmittel so anzusteuern, dass das Werkzeug 1 abgebremst wird.

Ferner kann das Elektrowerkzeug 10, 30 eine Positioniereinrichtung 29 umfassen, die ausgebildet ist, das Werkzeug 1 wahlweise in eine Betriebsstellung oder eine Sicherheitsstellung zu positionieren. Die Steuereinrichtung 4 kann ausgebildet sein, in Ansprechen auf das erkannte Kickback-Ereignis die Positioniereinrichtung 29 anzusteuern, so dass das Werkzeug 1 in die Sicherheitsstellung positioniert wird. Die Positionereinrichtung 29 ist beispielsweise ausgebildet, das Werkzeug 1 zwischen der Betriebsstellung und der Sicherheitsstellung zu verfahren und/oder verschwenken. Zweckmäßigerweise ist das Werkzeug 1 in der Sicherheitsstellung weiter in das Gehäuse 6 positioniert als in der Betriebsstellung.

Die Figur 6 zeigt ein Flussdiagramm eines Verfahrens zum Erkennen eines Kickback-Ereignisses eines Elektrowerkzeugs mit einem als Sägeblatt oder Fräser ausgebildeten rotierbaren Werkzeug. Das Verfahren umfasst die Schritte: Erfassen, S1, einer mechanischen Größe 3, wobei die mechanische Größe 3 eine Kraft, eine Beschleunigung, eine Geschwindigkeit, eine Auslenkung, eine Deformation und/oder eine mechanische Spannung umfasst und die mechanische Größe 3 von einer vom Werkzeug 1 ausgehenden Kraft abhängt, Bestimmen, S2, basierend auf einer Funktionsbestimmungsinformation, einer zu verwendenden Erkennungsfunktion aus einer ersten Erkennungsfunktion und einer von der ersten Erkennungsfunktion verschiedenen zweiten Erkennungsfunktion und Erkennen, S3, unter Verwendung der bestimmten Erkennungsfunktion, des Kickback-Ereignisses basierend auf der erfassten mechanischen Größe 3.

Zweckmäßigerweise wird das Verfahren mittels eines der vorstehend erläuterten Elektrowerkzeuge 10; 20; 30 ausgeführt.

Vorzugsweise verfügt das Verfahren über einen weiteren Schritt, in dem eine der vorstehend diskutierten Reaktionen auf das erkannte Kickback-Ereignis ausgeführt wird.

## Patentansprüche

1. Elektrowerkzeug (10; 20; 30) mit einem als Sägeblatt oder Fräser ausgebildetem rotierbaren Werkzeug (1), umfassend eine Sensoreinrichtung (2) zur Erfassung einer mechanischen Größe (3), wobei die mechanische Größe (3) eine Kraft, eine Beschleunigung, eine Geschwindigkeit, eine Auslenkung, eine Deformation und/oder eine mechanische Spannung umfasst und die mechanische Größe (3) von einer vom Werkzeug (1) ausgehenden Kraft abhängt, sowie eine mit der Sensoreinrichtung (2) kommunikativ gekoppelte Steuereinrichtung (4), die ausgebildet ist, basierend auf der erfassten mechanischen Größe (3) ein Kickback-Ereignis zu erkennen, wobei die Steuereinrichtung (4) ausgebildet ist, basierend auf einer Funktionsbestimmungsinformation wahlweise eine erste Erkennungsfunktion oder eine von der ersten Erkennungsfunktion verschiedene zweite Erkennungsfunktion zu bestimmen und die auf der erfassten mechanischen Größe basierende Erkennung des Kickback-Ereignisses unter Verwendung der bestimmten Erkennungsfunktion durchzuführen, **dadurch gekennzeichnet, dass** die Sensoreinrichtung (2) ausgebildet ist, als die mechanische Größe (3) eine mechanische Vektorgröße zu erfassen und die erste Erkennungsfunktion einen Vergleich einer Richtung der mechanischen Vektorgröße mit einem ersten Richtungsbereich (14) umfasst und die zweite Erkennungsfunktion einen Vergleich der Richtung der mechanischen Vektorgröße mit einem von dem ersten Richtungsbereich (14) verschiedenen zweiten Richtungsbereich (15) umfasst.

2. Elektrowerkzeug (10; 20; 30) mit einem als Sägeblatt oder Fräser ausgebildetem rotierbaren Werkzeug (1), umfassend eine Sensoreinrichtung (2) zur Erfassung einer mechanischen Größe (3), wobei die mechanische Größe (3) eine Kraft, eine Beschleunigung, eine Geschwindigkeit, eine Auslenkung, eine Deformation und/oder eine mechanische Spannung umfasst und die mechanische Größe (3) von einer vom Werkzeug (1) ausgehenden Kraft abhängt, sowie eine mit der Sensoreinrichtung (2) kommunikativ gekoppelte Steuereinrichtung (4), die ausgebildet ist, basierend auf der erfassten mechanischen Größe (3) ein Kickback-Ereignis zu erkennen, wobei die Steuereinrichtung (4) ausgebildet ist, basierend auf einer Funktionsbestimmungsinformation wahlweise eine erste Erkennungsfunktion oder eine von der ersten Erkennungsfunktion verschiedene zweite Erkennungsfunktion zu bestimmen und die auf der erfassten mechanischen Größe basierende Erkennung des Kickback-Ereignisses unter Verwendung der bestimmten Erkennungsfunktion durchzuführen, **dadurch gekennzeichnet, dass** die erste Sensoreinrichtung (2) ausgebildet ist, als die mechanische Größe (3) eine mechanische Vektorgröße zu erfassen und die erste Erkennungsfunktion einen Vergleich einer Richtungsänderung, insbesondere einer Winkelgeschwindigkeit und/oder einem Änderungswinkel, der mechanischen Vektorgröße mit einem ersten Richtungsänderungs-Schwellenwert umfasst und die zweite Erkennungsfunktion einen Vergleich der Richtungsänderung mit einem von dem ersten Richtungsänderungs-Schwellenwert verschiedenen zweiten Richtungsänderungs-Schwellenwert umfasst.

3. Elektrowerkzeug (10; 20; 30) nach Anspruch 1 oder 2, **dadurch gekennzeichnet, dass** sich die beiden Erkennungsfunktionen in ihrer Sensitivität unterscheiden.

4. Elektrowerkzeug (10; 20; 30) nach einem voranstehenden Anspruch, **dadurch gekennzeichnet, dass** die erste Erkennungsfunktion einen Vergleich der erfassten mechanischen Größe (3) mit einem ersten Schwellenwert umfasst und die zweite Erkennungsfunktion einen Vergleich der erfassten mechanischen Größe (3) mit einem von dem ersten Schwellenwert verschiedenen zweiten Schwellenwert umfasst.

5. Elektrowerkzeug (20) nach einem voranstehenden Anspruch, **dadurch gekennzeichnet, dass** die Sensoreinrichtung (2) ein Messlager (28) zur Erfassung der mechanischen Vektorgröße umfasst.

6. Elektrowerkzeug (10; 20; 30) nach einem der voranstehenden Ansprüche, **dadurch gekennzeichnet, dass** das Elektrowerkzeug (10; 20; 30) eine Benutzereingabeeinrichtung (5) umfasst, die zur Eingabe der Funktionsbestimmungsinformation durch einen Benutzer ausgebildet ist.

7. Elektrowerkzeug (10; 30) nach einem der voranstehenden Ansprüche, **dadurch gekennzeichnet, dass** das Elektrowerkzeug (10; 60) über eine Kommunikationsschnittstelle (35) zur Kommunikation mit einer externen Vorrichtung (38) verfügt, wobei die Steuereinrichtung (4) ausgebildet ist, die Funktionsbestimmungsinformation über die Kommunikationsschnittstelle (35) zu empfangen.

8. Elektrowerkzeug (10; 30) nach einem der voranstehenden Ansprüche, **dadurch gekennzeichnet, dass** das Elektrowerkzeug (10; 60) über eine Benutzeridentifizierungseinrichtung (36) verfügt, wobei die Steuereinrichtung (4) ausgebildet ist, die Funktionsbestimmungsinformation basierend auf einer mittels der Benutzeridentifizierungseinrichtung (36) erfolgten Identifizierung eines Benutzers des Elektrowerkzeugs (10; 60) bereitzustellen.

9. Elektrowerkzeug (10; 30) nach einem der voranstehenden Ansprüche, **dadurch gekennzeichnet**, die Sensoreinrichtung (2) ausgebildet ist, eine Betriebs- und/oder Umgebungsinformation, insbesondere eine Eigenschaft des Werkzeugs (1), eine Eigenschaft eines mit dem Werkzeug (1) zu bearbeitenden Werkstücks (11), eine Temperatur und/oder eine Luftfeuchtigkeit, zu erfassen, wobei die Steuereinrichtung (4) ausgebildet ist, die Funktionsbestimmungsinformation basierend auf der Betriebs- und/oder Umgebungsinformation bereitzustellen.

10. Elektrowerkzeug (10; 20; 30) nach einem der voranstehenden Ansprüche, **dadurch gekennzeichnet, dass** die Steuereinrichtung (4) ausgebildet ist, eine Kalibrierung wenigstens einer Erkennungsfunktion durchzuführen.

11. Elektrowerkzeug (10; 30) nach einem der voranstehenden Ansprüche, **dadurch gekennzeichnet, dass** das Elektrowerkzeug (10; 20; 30) eine Antriebseinrichtung (7) zum Antrieb des Werkzeugs (1) umfasst und die Steuereinrichtung (4) ausgebildet ist, in Ansprechen auf das erkannte Kickback-Ereignis die Antriebseinrichtung (7) anzusteuern, um den Antrieb des Werkzeugs (1) zu ändern, insbesondere, um das Werkzeug (1) abzubremsen.

12. Elektrowerkzeug (10; 30) nach einem der voranstehenden Ansprüche, **dadurch gekennzeichnet, dass** das Elektrowerkzeug (10; 60) eine Positioniereinrichtung (29) umfasst, die ausgebildet ist, das Werkzeug (1) wahlweise in eine Betriebsstellung oder eine Sicherheitsstellung zu positionieren und die Steuereinrichtung (4) ausgebildet ist, in Ansprechen auf das erkannte Kickback-Ereignis die Positioniereinrichtung (29) anzusteuern, so dass das Werkzeug (1) in die Sicherheitsstellung positioniert wird.

13. System umfassend ein Elektrowerkzeug (10) nach einem der voranstehenden Ansprüche sowie eine externe Vorrichtung (38), insbesondere einen Server, wobei das Elektrowerkzeug (10) ausgebildet ist, an die externe Vorrichtung (38) eine Betriebs- und/oder Umgebungsinformation und/oder eine Benutzeridentifizierungsinformation zu übertragen und die externe Vorrichtung (38) ausgebildet ist, basierend auf der Betriebs- und/oder Umgebungsinformation und/oder der Benutzeridentifizierungsinformation die Funktionsbestimmungsinformation bereitzustellen und an das Elektrowerkzeug (10) zu übertragen.

14. Verfahren zum Erkennen eines Kickback-Ereignisses eines Elektrowerkzeugs (10; 20; 30) mit einem als Sägeblatt oder Fräser ausgebildeten rotierbaren Werkzeug (1), umfassend die Schritte: Erfassen (S1) einer mechanischen Größe (3), wobei die mechanische Größe (3) eine Kraft, eine Beschleunigung, eine Geschwindigkeit, eine Auslenkung, eine Deformation und/oder eine mechanische Spannung umfasst und die mechanische Größe (3) von einer vom Werkzeug (1) ausgehenden Kraft abhängt, Bestimmen (S2), basierend auf einer Funktionsbestimmungsinformation, einer zu verwendenden Erkennungsfunktion aus einer ersten Erkennungsfunktion und einer von der ersten Erkennungsfunktion verschiedenen zweiten Erkennungsfunktion und Erkennen (S3), unter Verwendung der bestimmten Erkennungsfunktion, des Kickback-Ereignisses basierend auf der erfassten mechanischen Größe (3),
**dadurch gekennzeichnet, dass**
die mechanische Größe (3) eine mechanische Vektorgröße ist, die erste Erkennungsfunktion einen Vergleich einer Richtung der mechanischen Vektorgröße mit einem ersten Richtungsbereich (14) umfasst und die zweite Erkennungsfunktion einen Vergleich der Richtung der mechanischen Vektorgröße mit einem von dem ersten Richtungsbereich (14) verschiedenen zweiten Richtungsbereich (15) umfasst.

15. Verfahren zum Erkennen eines Kickback-Ereignisses eines Elektrowerkzeugs (10; 20; 30) mit einem als Sägeblatt oder Fräser ausgebildeten rotierbaren Werkzeug (1), umfassend die Schritte: Erfassen (S1) einer mechanischen Größe (3), wobei die mechanische Größe (3) eine Kraft, eine Beschleunigung, eine Geschwindigkeit, eine Auslenkung, eine Deformation und/oder eine mechanische Spannung umfasst und die mechanische Größe (3) von einer vom Werkzeug (1) ausgehenden Kraft abhängt, Bestimmen (S2), basierend auf einer Funktionsbestimmungsinformation, einer zu verwendenden Erkennungsfunktion aus einer ersten Erkennungsfunktion und einer von der ersten Erkennungsfunktion verschiedenen zweiten Erkennungsfunktion und Erkennen (S3), unter Verwendung der bestimmten Erkennungsfunktion, des Kickback-Ereignisses basierend auf der erfassten mechanischen Größe (3),
**dadurch gekennzeichnet, dass**
die mechanische Größe (3) eine mechanische Vektorgröße ist und die erste Erkennungsfunktion einen Vergleich einer Richtungsänderung, insbesondere einer Winkelgeschwindigkeit und/oder einem Änderungswinkel, der mechanischen Vektorgröße mit einem ersten Richtungsänderungs-Schwellenwert umfasst und die zweite Erkennungsfunktion einen Vergleich der Richtungsänderung mit einem von dem ersten Richtungsänderungs-Schwellenwert verschiedenen zweiten Richtungsänderungs-Schwellenwert umfasst.

## Claims

1. Power tool (10; 20; 30) with a rotatable tool (1) designed as a saw blade or a milling cutter, comprising a sensor device (2) for detecting a mechanical quantity (3), the mechanical quantity (3) comprising a force, an acceleration, a velocity, a deflection, a deformation and/or a mechanical stress, and the mechanical quantity (3) being dependent on a force emanating from the tool (1), and a control device (4) communicatively coupled to the sensor device (2), which control device (4) is adapted to recognize a kickback event based on the detected mechanical quantity (3), wherein the control device (4) is adapted to selectively determine, based on a function determination information, a first recognition function or a second recognition function different from the first recognition function, and to perform the recognition of the kickback event based on the detected mechanical quantity using the determined recognition function, **characterized in that** the sensor device (2) is adapted to detect, as the mechanical quantity (3), a mechanical vector quantity and the first recognition function comprises a comparison of a direction of the mechanical vector quantity with a first directional range (14) and the second recognition function comprises a comparison of the direction of the mechanical vector quantity with a second directional range (15) different from the first directional range (14).

2. Power tool (10; 20; 30) with a rotatable tool (1) designed as a saw blade or a milling cutter, comprising a sensor device (2) for detecting a mechanical quantity (3), the mechanical quantity (3) comprising a force, an acceleration, a velocity, a deflection, a deformation and/or a mechanical stress, and the mechanical quantity (3) being dependent on a force emanating from the tool (1), and a control device (4) communicatively coupled to the sensor device (2), which control device (4) is adapted to recognize a kickback event based on the detected mechanical quantity (3), wherein the control device (4) is adapted to selectively determine, based on a function determination information, a first recognition function or a second recognition function different from the first recognition function, and to perform the recognition of the kickback event based on the detected mechanical quantity using the determined recognition function, **characterized in that** the sensor device (2) is adapted to detect, as the mechanical quantity (3), a mechanical vector quantity and the first recognition function comprises a comparison of a change of direction, in particular an angular velocity and/or a change angle, of the mechanical vector quantity with a first directional change threshold and the second recognition function comprises a comparison of the change of direction with a second directional change threshold different from the first directional change threshold.

3. Power tool (10; 20; 30) according to claim 1 or 2, **characterized in that** the two recognition functions differ in their sensitivity.

4. Power tool (10; 20; 30) according to a preceding claim, **characterized in that** the first recognition function comprises a comparison of the detected mechanical quantity (3) with a first threshold and the second recognition function comprises a comparison of the detected mechanical quantity (3) with a second threshold different from the first threshold.

5. Power tool (20) according to a preceding claim, **characterized in that** the sensor device (2) comprises a measuring bearing (28) for detecting the mechanical vector quantity.

6. Power tool (10; 20; 30) according to one of the preceding claims, **characterised in that** the power tool (10; 20; 30) comprises a user input device (5) adapted for input of the function determination information by a user.

7. Power tool (10; 30) according to one of the preceding claims, **characterized in that** the power tool (10; 60) has a communication interface (35) for communication with an external device (38), wherein the control device (4) is adapted to receive the function determination information via the communication interface (35).

8. Power tool (10; 30) according to one of the preceding claims, **characterized in that** the power tool (10; 60) has a user identification device (36), wherein the control device (4) is adapted to provide the function determination information based on an identification of a user of the power tool (10; 60) made by means of the user identification device (36) .

9. Power tool (10; 30) according to one of the preceding claims, **characterized in that** the sensor device (2) is adapted to detect operating information and/or environmental information, in particular a property of the tool (1), a property of a workpiece (11) to be machined with the tool (1), a temperature and/or an air humidity, the control device (4) being adapted to provide the function determination information based on the operating information and/or environmental information.

10. Power tool (10; 20; 30) according to one of the preceding claims, **characterized in that** the control device (4) is adapted to perform a calibration of at least one recognition function.

11. Power tool (10; 30) according to one of the preceding claims, **characterized in that** the power tool (10; 20; 30) comprises a drive device (7) for driving the tool (1) and the control device (4) is adapted to control the drive device (7) in response to the detected kickback event in order to change the driving of the tool (1), in particular to brake the tool (1) .

12. Power tool (10; 30) according to one of the preceding claims, **characterized in that** the power tool (10; 60) comprises a positioning device (29) adapted to selectively position the tool (1) in an operating position or a safety position and the control device (4) is adapted to control the positioning device (29) in response to the detected kickback event so that the tool (1) is positioned in the safety position.

13. System comprising a power tool (10) according to one of the preceding claims and an external device (38), in particular a server, wherein the power tool (10) is adapted to transmit operating information and/or environmental information and/or user identification information to the external device (38) and the external device (38) is adapted to provide the function determination information based on the operating information and/or environmental information and/or the user identification information and to transmit the function determination information to the power tool (10) .

14. Method for recognizing a kickback event of a power tool (10; 20; 30) with a rotatable tool (1) designed as a saw blade or a milling cutter, comprising the steps: detecting (S1) a mechanical quantity (3), wherein the mechanical quantity (3) comprises a force, an acceleration, a velocity, a deflection, a deformation and/or a mechanical stress and the mechanical quantity (3) depends on a force emanating from the tool (1), determining (S2), based on function determination information, a recognition function to be used from a first recognition function and a second recognition function different from the first recognition function, and recognizing (S3), using the determined recognition function, the kickback event based on the detected mechanical quantity (3), **characterized in that** the mechanical quantity (3) is a mechanical vector quantity, the first recognition function comprises a comparison of a direction of the mechanical vector quantity with a first directional range (14) and the second recognition function comprises a comparison of the direction of the mechanical vector quantity with a second directional range (15) different from the first directional range (14).

15. Method for recognizing a kickback event of a power tool (10; 20; 30) with a rotatable tool (1) designed as a saw blade or a milling cutter, comprising the steps: detecting (S1) a mechanical quantity (3), wherein the mechanical quantity (3) comprises a force, an acceleration, a velocity, a deflection, a deformation and/or a mechanical stress and the mechanical quantity (3) depends on a force emanating from the tool (1), determining (S2), based on function determination information, a recognition function to be used from a first recognition function and a second recognition function different from the first recognition function, and recognizing (S3), using the determined recognition function, the kickback event based on the detected mechanical quantity (3) **characterized in that** the mechanical quantity (3) is a mechanical vector quantity and the first recognition function comprises a comparison of a change of direction, in particular an angular velocity and/or a change angle, of the mechanical vector quantity with a first directional change threshold and the second recognition function comprises a comparison of the change of direction with a second directional change threshold different from the first directional change threshold.

## Revendications

1. Outil électrique (10 ; 20 ; 30) ayant un outil (1) rotatif réalisé en tant que lame de scie ou fraiseuse, comprenant un dispositif de détection (2) pour la détection d'une grandeur mécanique (3), dans lequel la grandeur mécanique (3) comporte une force, une accélération, une vitesse, une déviation, une déformation et/ou une tension mécanique et la grandeur mécanique (3) dépend d'une force sortant de l'outil (1), ainsi qu'un dispositif de commande (4) couplé en communication avec le dispositif de détection (2) qui est réalisé afin de reconnaître sur la base de la grandeur mécanique (3) détectée un événement de rebond, dans lequel le dispositif de commande (4) est réalisé afin de déterminer sur la base d'une information de détermination fonctionnelle au choix une première fonction de reconnaissance ou une seconde fonction de reconnaissance différente de la première fonction de reconnaissance et de réaliser la reconnaissance se basant sur la grandeur mécanique détectée de l'événement de rebond en utilisant la fonction de reconnaissance déterminée, **caractérisé en ce que** le dispositif de détection (2) est réalisé afin de détecter en tant que grandeur mécanique (3) une grandeur de vecteur mécanique et la première fonction de reconnaissance comporte une comparaison d'une direction de la grandeur de vecteur mécanique avec une première zone de direction (14) et la seconde fonction de reconnaissance comporte une comparaison de la direction de la grandeur de vecteur mécanique avec une seconde zone de direction (15) différente de la première zone de direction (14).

2. Outil électrique (10 ; 20 ; 30) ayant un outil (1) rotatif réalisé en tant que lame de scie ou fraiseuse, comprenant un dispositif de détection (2) pour la détection d'une grandeur mécanique (3), dans lequel la grandeur mécanique (3) comporte une force, une accélération, une vitesse, une déviation, une déformation et/ou une tension mécanique et la grandeur mécanique (3) dépend d'une force sortant de l'outil (1), ainsi qu'un dispositif de commande (4) couplé en communication avec le dispositif de détection (2) qui est réalisé afin de reconnaître sur la base de la grandeur mécanique détectée (3) un événement de rebond, dans lequel le dispositif de commande (4) est réalisé afin de déterminer sur la base d'une information de détermination fonctionnelle au choix une première fonction de reconnaissance ou une seconde fonction de reconnaissance différente de la première fonction de reconnaissance et de réaliser la reconnaissance se basant sur la grandeur mécanique détectée de l'événement de rebond en utilisant la fonction de reconnaissance déterminée, **caractérisé en ce que** le premier dispositif de détection (2) est réalisé afin de détecter en tant que grandeur mécanique (3) une grandeur de vecteur mécanique et la première fonction de reconnaissance comporte une comparaison d'une modification de direction, en particulier d'une vitesse d'angle et/ou d'un angle de modification, de la grandeur de vecteur mécanique avec une première valeur seuil de modification de direction et la seconde fonction de reconnaissance comporte une comparaison de la modification de direction avec une seconde valeur seuil de modification de direction différente de la première valeur seuil de modification de direction.

3. Outil électrique (10 ; 20 ; 30) selon la revendication 1 ou 2, **caractérisé en ce que** les deux fonctions de reconnaissance se distinguent dans leur sensibilité.

4. Outil électrique (10 ; 20; 30) selon une revendication précédente, **caractérisé en ce que** la première fonction de reconnaissance comporte une comparaison de la grandeur mécanique détectée (3) avec une première valeur seuil et la seconde fonction de reconnaissance comporte une comparaison de la grandeur mécanique détectée (3) avec une seconde valeur seuil différente de la première valeur seuil.

5. Outil électrique (20) selon une revendication précédente, **caractérisé en ce que** le dispositif de détection (2) comporte un palier de mesure (28) pour la détection de la grandeur de vecteur mécanique.

6. Outil électrique (10 ; 20; 30) selon l'une quelconque des revendications précédentes, **caractérisé en ce que** l'outil électrique (10 ; 20 ; 30) comporte un dispositif de saisie d'utilisateur (5) qui est réalisé pour la saisie de l'information de détermination fonctionnelle par un utilisateur.

7. Outil électrique (10 ; 30) selon l'une quelconque des revendications précédentes, **caractérisé en ce que** l'outil électrique (10 ; 60) dispose d'une interface de communication (35) pour la communication avec un dispositif externe (38), dans lequel le dispositif de commande (4) est réalisé afin de recevoir l'information de détermination fonctionnelle par le biais de l'interface de communication (35).

8. Outil électrique (10 ; 30) selon l'une quelconque des revendications précédentes, **caractérisé en ce que** l'outil électrique (10 ; 60) dispose d'un dispositif d'identification d'utilisateur (36), dans lequel le dispositif de commande (4) est réalisé afin de fournir l'information de détermination fonctionnelle sur la base d'une identification effectuée au moyen du dispositif d'identification d'utilisateur (36) d'un utilisateur de l'outil électrique (10 ; 60).

9. Outil électrique (10 ; 30) selon l'une quelconque des revendications précédentes, **caractérisé en ce que** le dispositif de détection (2) est réalisé afin de détecter une information de fonctionnement et/ou d'environnement, en particulier une propriété de l'outil (1), une propriété d'une pièce (1) à usiner avec l'outil (11), une température et/ou une humidité de l'air, dans lequel le dispositif de commande (4) est réalisé afin de fournir l'information de détermination fonctionnelle sur la base de l'information de fonctionnement et/ou d'environnement.

10. Outil électrique (10 ; 20; 30) selon l'une quelconque des revendications précédentes, **caractérisé en ce que** le dispositif de commande (4) est réalisé afin de réaliser un étalonnage au moins d'une fonction de reconnaissance.

11. Outil électrique (10 ; 30) selon l'une quelconque des revendications précédentes, **caractérisé en ce que** l'outil électrique (10 ; 20 ; 30) comporte un dispositif d'entraînement (7) pour l'entraînement de l'outil (1) et le dispositif de commande (4) est réalisé afin de commander en réponse à l'événement de rebond reconnu le dispositif d'entraînement (7) afin de modifier l'entraînement de l'outil (1), en particulier afin de freiner l'outil (1).

12. Outil électrique (10 ; 20; 30) selon l'une quelconque des revendications précédentes, **caractérisé en ce que** l'outil électrique (10 ; 60) comporte un dispositif de positionnement (29) qui est réalisé afin de positionner l'outil (1) au choix dans une position de fonctionnement ou une position de sécurité et le dispositif de commande (4) est réalisé afin de commander en réponse à l'événement de rebond reconnu le dispositif de positionnement (29) de sorte que l'outil (1) soit positionné dans la position de sécurité.

13. Système comprenant un outil électrique (10) selon l'une quelconque des revendications précédentes ainsi qu'un dispositif externe (38), en particulier un serveur, dans lequel l'outil électrique (10) est réalisé afin de transmettre au dispositif externe (38) une information de fonctionnement et/ou d'environnement et/ou une information d'identification d'utilisateur et le dispositif externe (38) est réalisé afin de fournir sur la base de l'information de fonctionnement et/ou d'environnement et/ou l'information d'identification d'utilisateur l'information de détermination fonctionnelle et de la transmettre à l'outil électrique (10).

14. Procédé de reconnaissance d'un événement de rebond d'un outil électrique (10 ; 20 ; 30) ayant un outil (1) rotatif réalisé en tant que lame de scie ou fraiseuse, comprenant les étapes: la détection (S1) d'une grandeur mécanique (3), dans lequel la grandeur mécanique (3) comporte une force, une accélération, une vitesse, une déviation, une déformation et/ou une tension mécanique et la grandeur mécanique (3) dépend d'une force sortant de l'outil (1), la détermination (S2), sur la base d'une information de détermination fonctionnelle, d'une fonction de reconnaissance à utiliser à partir d'une première fonction de reconnaissance et d'une seconde fonction de reconnaissance différente de la première fonction de reconnaissance et la reconnaissance (S3), en utilisant la fonction de reconnaissance déterminée, de l'événement de rebond sur la base de la grandeur mécanique (3) détectée, **caractérisé en ce que** la grandeur mécanique (3) est une grandeur de vecteur mécanique, la première fonction de reconnaissance comporte une comparaison d'une direction de la grandeur de vecteur mécanique avec une première zone de direction (14) et la seconde fonction de reconnaissance comporte une comparaison de la direction de la grandeur de vecteur mécanique avec une seconde zone de direction (15) différente de la première zone de direction (14).

15. Procédé de reconnaissance d'un événement de rebond d'un outil électrique (10 ; 20 ; 30) ayant un outil (1) rotatif réalisé en tant que lame de scie ou fraiseuse, comprenant les étapes: la détection (S1) d'une grandeur mécanique (3), dans lequel la grandeur mécanique (3) comporte une force, une accélération, une vitesse, une déviation, une déformation et/ou une tension mécanique et la grandeur mécanique (3) dépend d'une force sortant de l'outil (1), la détermination (S2), sur la base d'une information de détermination fonctionnelle, d'une fonction de reconnaissance à utiliser à partir d'une première fonction de reconnaissance et une seconde fonction de reconnaissance différente de la première fonction de reconnaissance et la reconnaissance (S3), en utilisant la fonction de reconnaissance déterminée, de l'événement de rebond sur la base de la grandeur mécanique détectée (3), **caractérisé en ce que** la grandeur mécanique (3) est une grandeur de vecteur mécanique et la première fonction de reconnaissance comporte une comparaison d'une modification de direction, en particulier une vitesse d'angle et/ou un angle de modification, de la grandeur de vecteur mécanique avec une première valeur seuil de modification de direction et la seconde fonction de reconnaissance comporte une comparaison de la modification de direction avec une seconde valeur seuil de modification de direction différente de la première valeur seuil de modification de direction.
